**Europäisches Patentamt**

**European Patent Office**

**Office européen des brevets**

(19)

(11) Veröffentlichungsnummer : **0 346 663 B1**

(12) **EUROPÄISCHE PATENTSCHRIFT**

(45) Veröffentlichungstag der Patentschrift :
**26.02.92 Patentblatt 92/09**

(51) Int. Cl.$^5$ : **B60C 15/02, B60C 15/04**

(21) Anmeldenummer : **89109501.0**

(22) Anmeldetag : **26.05.89**

(54) **Fahrzeugluftreifen mit krempelbaren Wülsten.**

(30) Priorität : **14.06.88 DE 3820135**

(43) Veröffentlichungstag der Anmeldung :
**20.12.89 Patentblatt 89/51**

(45) Bekanntmachung des Hinweises auf die
Patenterteilung :
**26.02.92 Patentblatt 92/09**

(84) Benannte Vertragsstaaten :
**AT BE CH DE ES FR GB GR IT LI LU NL SE**

(56) Entgegenhaltungen :
**EP-A- 0 230 527**
**EP-A- 0 235 364**
**DE-A- 3 440 440**
**FR-A- 2 137 810**

(73) Patentinhaber : **Continental AG**
**Königsworther Platz 1 Postfach 1 69**
**W-3000 Hannover 1 (DE)**

(72) Erfinder : **Brettschneider, Wolfgang**
**Schwalbenweg 7**
**W-3016 Seelze/Velber (DE)**
Erfinder : **Boltze, Carsten**
**Buschweg 7**
**W-3015 Wennigsen (DE)**
Erfinder : **Huinink, Heinrich**
**Elbinger Strasse 2F**
**W-3008 Garbsen 1 (DE)**

EP 0 346 663 B1

**Beschreibung**

Die Erfindung bezieht sich auf einen Fahrzeugluftreifen mit einer Karkasse, die um zwei Wulstkerne herumgeschlagen ist, wobei die Wulstkerne aus Festigkeitsträgern wie Kunststoff-Filamenten und/oder Metalldrähten bestehen und die Wülste krempelbar sind. Ein derartiger Fahrzeugluftreifen ist in der deutschen Patentanmeldung 32 44 046.4 offenbart. Dort ist angegeben, daß der Wulst um einen gewissen Winkel verdrehbar ist, der von den Materialeigenschaften und dem Aufbau des Wulstkernes und des übrigen Wulstes abhängt. Schließlich ist dort zur Erleichterung der Drehbewegung des Wulstes um den Wulstkern vorgeschlagen, daß der Wulstkern nichthaftend in den Wulst eingebettet wird, z.B. durch Umwickeln mit einem entsprechend vorbereitetem Gewebestreifen.

Die DE-A-3 440 440 Zeigt einen Reifen gemäß dem Oberbegriff des Anspruchs 1, bei dem jedoch äußere Drahtlagen insgesamt um eine Seele bewegbar sind.

Die erwähnten Maßnahmen verringerten den Widerstand der Wülste gegen ihr Krempeln tatsächlich so weit, daß ein Montgeverfahren möglich wurde, das keine großen Montagevertiefungen erfordert. Allerdings ließ die Dauerfestigkeit dieser Wülste und die Rundlaufgenauigkeit der damit ausgestatteten Reifen zu wünschen übrig. Es stellte sich die Aufgabe, die Dauerfestigkeit zu erhöhen, ohne die Wulstkrempelbarkeit zu verringern.

Die Aufgabe wird erfindungsgemäß durch die Merkmale des Anspruchs 1 gelöst.

Der Erfindung liegen zwei in aufwendigen Versuchen gefundene Erkenntnisse zugrunde. Zum einen erwies sich die schon im Stand der Technik erwähnte Hoffnung auf eine Verdrehbarkeit der Wulstkerne in sich als trügerisch; infolge des zwischen die Kerndrähte eingedrungenen klebrigen Kautschuks waren die Kerne quasi starr. Zum anderen erwies sich eine Relativbewegung des Wulstes, insbesondere des Karkaßumschlages um den quasi starren Wulstkern als sehr schädlich, was damit erklärt werden kann, daß die Lage des Wulstkernes gegenüber dem übrigen Wulst nur unpräzise bestimmt ist und daß eine Konzentration der Relativbewegung auf kleine Flächen zu Oberflächenverletzungen führt. Der entscheidende Lösungsgedanke ist der, daß entgegen bisheriger Lehre nicht die Drehbarkeit des kompletten Wulstkernes gegenüber dem übrigen Wulst diese Probleme löst, sondern die Drehbarkeit jedes einzelnen Festigkeitsträgers um seine Längsachse gegenüber dem umgebenden Gummi. Die individuelle Drehbarkeit eines jeden Festigkeitsträgers wird dadurch erreicht, daß Festigkeitsträger eingesetzt werden, deren Oberflächen per se keine Haftung an Gummi zulassen oder dadurch, daß die Oberfläche der Festigkeitsträger der Wulstkerne eine haftungsverhindernde Schicht aufweist.

Beim Krempeln bewegen sich die äußeren Kernfestigkeitsträger um die Seele wie die Gondeln eines Riesenrades um dessen Achse. Das Wesentliche ist, daß sie ihre Bewegung auf etwa kreisförmiger Bahn um die Kernseele rein translatorisch ausführen, also ohne Drehung um ihre eigene Achse. Dadurch sind alle Spannungs- und Reibungskonzentrationen vermieden.

Nach einer Weiterbildung der Erfindung sind die Festigkeitsträger der Wulstkerne vollflächig berührend in eine Gummischicht eingebettet. Dies ist gleichbedeutend damit, daß sie ohne Luft vollständig von Gummi umgeben sind. Dies führt infolge hoher Schmiegung zu besonders großen wirksamen Flächen zur Kraftübertragung zwischen Karkasse und Wulstkern. Zweckmäßigerweise werden Polymere verwendet, die bei Abkühlung von der Vulkanisationstemperatur stärker schrumpfen als das Material der Festigkeitsträger. Die beste Kraftübertragung wird nämlich bei leichter Preßpassung erreicht.

Um trotz der leichten Preßpassung eine leichte Drehbeweglichkeit zu gewährleisten, empfiehlt es sich, daß die Schicht zur Haftungsverhinderung Schmiermittel enthält. Bei Reifen, deren Wulstkerne aus Stahldrähten aufgebaut sind, wurden beste Ergebnisse damit erzielt, daß die Schicht zur Haftungsverhinderung zumindest ein Metallstearat enthält, insbesondere Calcium- und/oder Natrium- und/oder Zinkstearat.

Zweckmäßigerweise wird auf das übliche Verkupfern oder Vermessingen der Stahldrähte für erfindungsgemäße Wulstkerne verzichtet, denn es gehört zum Wesen der Erfindung, daß jeder individuelle Festigkeitsträger im umgebenden Gummi gerade nicht haftet. Messing und Kupfer fördern aber die Haftung. Wegen des Verzichtes auf die edelmetallähnliche Beschichtung der Wulstdrähte empfiehlt es sich, daß die Schicht zur Haftungsverhinderung auch wasserabweisende Substanzen enthält wie Mineralöle und daß diese Beschichtung sofort aufgebracht wird, so daß nirgends korrosionsungeschützter Draht gehandhabt wird. Eine weitere Verbesserung wird durch die Verchromung oder Verzinkung der Drähte ermöglicht.

Neben erhöhter Dauerhaltbarkeit und erleichterter Krempelbarkeit ermöglicht die Erfindung auch eine erhöhte Rundlaufgenauigkeit. Zweckmäßigerweise weist dazu die Gummischicht, in die die Festigkeitsträger vollflächig berührend eingebettet sind, eine Shore-Härte zwischen 85 und 92 auf.

Die Erfindung wird nachfolgend anhand zweier Figuren näher erläutert. Es zeigt

Fig. 1 ein Fahrzeugrad mit erfindungsgemäßen Luftreifen im Querschnitt und

Fig. 2 als Einzelheit aus Fig. 1 einen Teilquerschnitt durch einen Wulstkern.

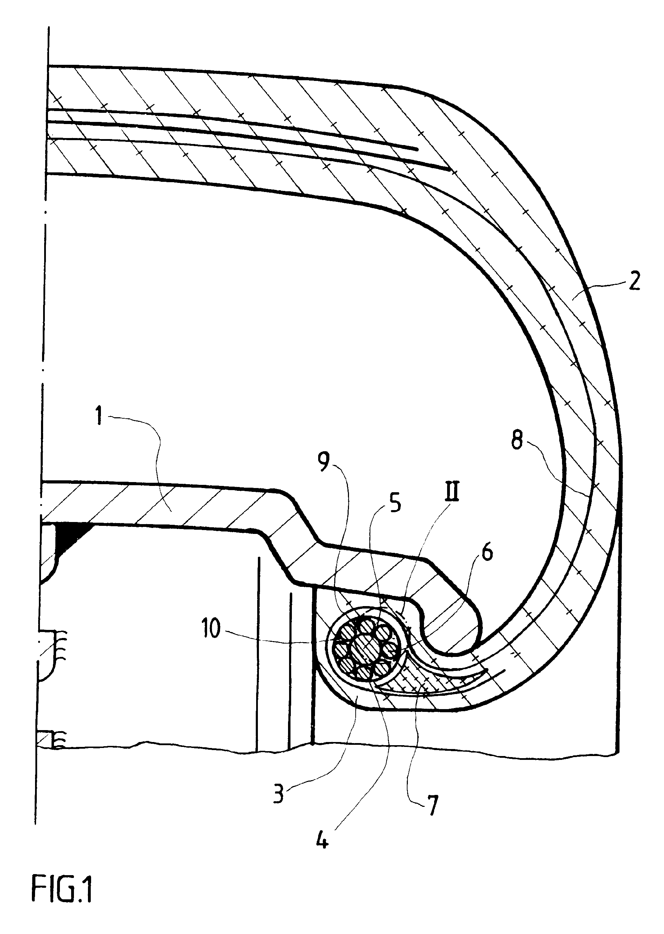

Die Fig. 1 zeigt im Querschnitt den oberen Teil der rechten Hälfte eines Fahrzeugrades. Es weist eine Felge 1 und einen Luftreifen 2 auf. Die Wülste 3 des Luftreifens 2 sitzen auf der radial inneren Seite der Felge 1. In den Wülsten 3 befinden sich Wulstkerne 4, die aus einem Seelendraht 5 und acht spiralig darum gewickelten Schlagdrähten 6 bestehen. An einen jeden Wulstkern 4 schließt ein Füllprofil 7 an. Die einlagige Radialkarkasse 8 ist um die Wulstkerne 4 und die Füllprofile 7 herumgeschlagen. Die Drähte 5,6 sind auf ihrer Oberfläche 10 mit einem Haftungsverhinderer beschichtet und nach dem Verseilen mit einer Kautschuklösung durchtränkt worden, die nach der Vulkanisation den harten Bettungsgummi 9 ergeben hat. Ähnlich den Wälzkörpern in einem Wälzlagerkäfig sind so die Drähte 5,6 der Wulstkerne 4 in ihrer Lage gegenüber den Wülsten spielfrei festgelegt, wobei ihnen aber als Bewegungsfreiheit die Rotation um die eigene Achse infolge der nicht haftenden Stahldrahtoberfläche ermöglicht ist.

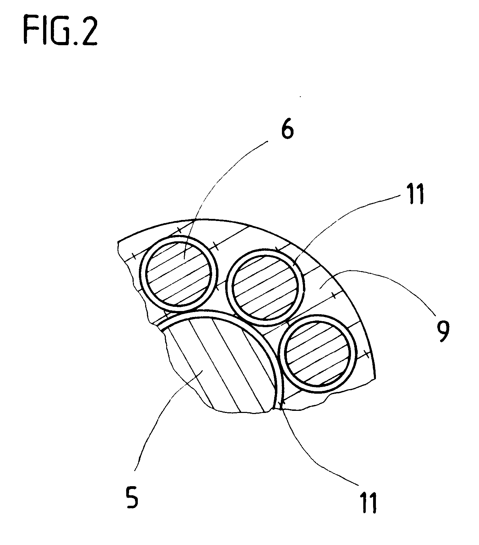

Die Fig. 2 zeigt einen Teilquerschnitt eines Wulstkernes als Einzelheit. Es ist die haftungsverhindernde Schicht 11 auf den Festigkeitsträgern 5,6 dargestellt. Dadurch kommt es zu keiner Haftung zwischen dem Bettungsgummi 9 und den Festigkeitsträgern.

Die präzise Drahtfixierung verhindert Ausknickungen und Aufspleißungen der Wulstkerne 4 bei Druckbelastung und der eine Freiheitsgrad der Drähte 5,6 ermöglicht dennoch das Krempeln der Wülste 4.

## Patentansprüche

1. Fahrzeugluftreifen (2) mit einer Karkasse (9), die um zwei innerhalb der Wülste (3) angeordnete Wulstkerne (4) herumgeschlagen ist, wobei die Wulstkerne (4) aus äußeren Festigkeitsträgern (6) und inneren Festigkeitsträgern (5) wie Kunststoff-Filamenten und/oder Metalldrähten bestehen und die Wülste (3) krempelbar sind unter Ausbildung eines Drehgelenkes, wobei sich beim Krempeln die äußeren Festigkeitsträger (6) auf einer etwa kreisförmigen Bahn um die inneren Festigkeitsträger (5) bewegen, **dadurch gekennzeichnet,** daß die Oberfläche (10) der Festigkeitsträger (5, 6) der Wulstkerne (4) eine Haftung an vulkanisiertem Gummi, zumindest insoweit die Festigkeitsträger (5, 6) in der Vulkanisationsstellung von Kautschuk benetzt sind, beim Krempeln verhindert, sodaß dabei jeder einzelne Festigkeitsträger (5, 6) gegenüber dem umgebenden Wulstgummi (9) derart um seine Längsachse einzeln drehbar ist, daß die äußeren Festigkeitsträger (6) rein translatorisch, also ohne Drehung um ihre eigene Achse, auf einer Kreisbahn bewegbar sind.

2. Fahrzeugluftreifen (2) nach Anspruch 1, dadurch gekennzeichnet, daß die Oberfläche (10) der Festigkeitsträger (5,6) der Wulstkerne (4) eine haftungsverhindernde Schicht (11) aufweist.

3. Fahrzeugluftreifen (2) nach Anspruch 1, dadurch gekennzeichnet, daß die Festigkeitsträger (5,6) der Wulstkerne (4) vollflächig berührend in eine Gummischicht (9) eingebettet sind.

4. Fahrzeugluftreifen (2) nach Anspruch 2, dadurch gekennzeichnet, daß die haftungsverhindernde Schicht (11) Schmiermittel enthält.

5. Fahrzeugluftreifen (2) nach Anspruch 4, dessen Wulstkerne (4) aus Stahldrähten aufgebaut sind, dadurch gekennzeichnet, daß die haftungsverhindernde Schicht (11) zumindest ein Metallstearat enthält.

6. Fahrzeugluftreifen (2) nach Anspruch 3, dadurch gekennzeichnet, daß die Gummischicht (9) eine Shore-Härte zwischen 85 und 92 aufweist.

## Claims

1. Pneumatic vehicle tyre (2), having a carcase (9) which is wrapped around two bead cores (4) disposed internally of the beads (3), the bead cores (4) comprising outer reinforcing members (6) and inner reinforcing members (5), such as plastics material filaments and/or metal wires, and the beads (3) are capable of being turned-up so as to form a pivot, the outer reinforcing members (6) being displaced along a substantially circular path around the inner reinforcing members (5) during the turning-up process, characterised in that the surface (10) of the reinforcing members (5, 6) of the bead cores (4) prevents an adhesion to vulcanised rubber during the turning-up process, at least insofar as the reinfocing members (5, 6) are wetted in the vulcanised state of rubber, so that each individual reinforcing member (5, 6) is thereby individually rotatable about its longitudinal axis relative to the surrounding rubber bead (9) such that the outer reinforcing members (6) are displaceable along a circular path in a purely translatory manner, that is to say without rotation about their own axis.

2. Pneumatic vehicle tyre (2) according to claim 1, characterised in that the surface (10) of the reinforcing members (5, 6) of the bead cores (4) has an adhesion-preventing layer (11).

3. Pneumatic vehicle tyre (2) according to claim 1, characterised in that the reinforcing members (5, 6) of the bead cores (4) are embedded in a rubber layer (9) so that all surfaces are fully contiguous therewith.

4. Pneumatic vehicle tyre (2) according to claim 2, characterised in that the adhesion-preventing layer (11) contains lubricants.

5. Pneumatic vehicle tyre (2) according to claim 4, the bead cores (4) of which are formed from steel wires, characterised in tha the adhesion-preventing layer (11) contains at least one metal stearate.

6. Pneumatic vehicle tyre (2) according to claim 3, characterised in that the rubber layer (9) has a Shore hardness of between 85 and 92.

**Revendications**

1. Pneumatique (2) pour véhicule, comportant une carcasse (9) qui est rabattue autour de deux tringles (4) disposées à l'intérieur des talons (3), les tringles (4) étant constituées d'éléments porteurs de résistance extérieurs (6) et intérieurs (5) tels que des filaments de matière synthétique et/ou des fils métalliques et les talons (3) étant retroussables en configurant une articulation rotative, les éléments porteurs de résistance extérieurs (6) se déplaçant, lors du retroussage, sur une trajectoire approximativement circulaire autour des éléments porteurs de résistance intérieurs (5), **caractérisé** en ce que la surface extérieure (10) des éléments porteurs de résistance (5,6) des tringles (4) empêche l'adhérence sur du caoutchouc vulcanisé lors du retroussage, au moins dans la mesure où les éléments porteurs de résistance (5,6) sont imprégnés de caoutchouc dans la position de vulcanisation, de sorte que chaque élément porteur de résistance (5,6) peut être, par rapport au caoutchouc de talon entourant (9), tourné individuellement autour de son axe longitudinal de telle sorte que les éléments porteurs de résistance extérieurs (6) peuvent être replacés sur une trajectoire circulaire en pure translation, c'est-à-dire sans rotation autour de leur propre axe.

2. Pneumatique (2) pour véhicule selon la revendication 1, caractérisé en ce que la surface extérieure (10) des éléments porteurs de résistance (5,6) des tringles (4) présente une couche (11) empêchant l'adhérence.

3. Pneumatique (2) pour véhicule selon la revendication 1, caractérisé en ce que les éléments porteurs de résistance (5,6) des tringles (4) sont encastrés, en contact sur toute la surface, dans une couche de caoutchouc (9).

4. Pneumatique (2) pour véhicule selon la revendication 2, caractérisé en ce que la couche empêchant l'adhérence (11) contient un lubrifiant.

5. Pneumatique (2) pour véhicule selon la revendication 4, dont les tringles (4) sont constituées de fils d'acier, caractérisé en ce que la couche (11) empêchant l'adhérence contient au moins un stéarate métallique.

6. Pneumatique (2) pour véhicule selon la revendication 3, caractérisé en ce que la couche de caoutchouc (9) présente une dureté Shore comprise entre 85 et 92.

FIG.1

FIG.2